# EUROPEAN PATENT SPECIFICATION

(11) **EP 1 263 165 B1**
(45) Date of publication and mention of the grant of the patent: **22.12.2004**
(21) Application number: 01440146.7
(22) Date of filing: 29.05.2001
(51) Int. Cl.: H04L 12/24

(54) **Communication between an application and a network element**
Kommunikation zwischen einer Applikation und einem Netzelement
Communication entre une application et un élément de réseau

(43) Date of publication of application: 04.12.2002
(73) Proprietor: ALCATEL, 75008 Paris (FR)
(72) Inventor: Pham, Hien-Thong, 1070 Brussels (BE); Batsleer, Claudine, 9860 Scheldewindeke (BE); Chantrain, Dominique, 2650 Edegem (BE)
(74) Representative: Urlichs, Stefan, Dipl.-Phys.

(56) References cited:
- US-B1- 6 219 703
- SYLOR ET AL: "Applying network management standards to system management;the case for the common agent" SYSTEMS MANAGEMENT, 1993., PROCEEDINGS OF THE IEEE FIRST INTERNATIONAL WORKSHOP ON LOS ANGELES, CA, USA 14-16 APRIL 1993, LOS ALAMITOS, CA, USA,IEEE COMPUT. SOC, 14 April 1993 (1993-04-14), pages 110-117, XP010095808 ISBN: 0-8186-3820-6

## Description

### Field of the Invention

The invention relates to the communication between network elements of a telecommunications network and an application platform particularly in IP networks.

### Background of the Invention

Today telecommunications networks and especially IP networks (IP: Internet Protocol) are evolving towards more types of network elements, more functionality, more protocols, more service support, etc. However, to allow applications, which implement services, to use these functions, mechanisms are needed to send information on network events from network elements to the applications platform.

As network elements are becoming more intelligent and supporting more functions, applications need mechanisms to interact with these network elements: sending commands, e.g., to establish connections, to control routing and NAT tables (NAT: Network Address Translation), etc., and receiving notifications when certain events occur, e.g. information on user presence and location when a user starts a session. Many of these functions are as such already available through existing protocols and network element interfaces. However, although the protocols themselves are standardized to a certain extent, there is no way to know whether a given network element supports a given notification or a given command, which version/variant it supports, etc. unless by manually inspecting the user manuals of the equipment.

US 6,219,703 describes the classical relation between a network manager and a managed device. The managed device stores a device MIB (Management Information Base) and a management structure MIB. The manager detects the presence of the device and downloads the management structure MIB if the device is unknown. From the management structure MIB, it contructs, compiles and loads into its memory a MIB corresponding to the device MIB.

The conference article "Applying Network Management Standards to System Management; the case for the Common Agent" by M. Sylor et al., Systems Management 1993; Proc. IEEE pages 110-117, describes the different current network and system management standards and proposes a common agent to hanlde all of them in one agent.

For application platforms running on top of heterogeneous networks (i.e. multiple types of network elements from different vendors), this implies that configuring the application platform such that it uses the correct notification and command variant to each individual network element is a tremendous task, with important operational costs.

The problem is that today a mechanism is lacking through which application platforms can find out what functions, protocols, notifications, and commands a network element offers on their interfaces.

### Summary of the Invention

It is therefore an object of the present invention to provide a network element and associated management information base, which can be actively investigated by an application on its abilities.

These and other objects that appear below are achieved by an network element and related management information base that describes the triggers and handles interface of a network element. A management information base is a database which contains managed objects, which describe variables and parameters accessible by a network management system to control and monitor the network element. This database stores additional managed objects which describe the triggers and handles supported by said network element. The triggers are notifications containing information to be sent by said network element to an application upon occurrence of predefined events and the handles are commands to be sent by an applicaticn requesting execution of predefined actions at said network element.

The existence of these additional objects allows an application platform to automatically discover and adapt to the interfaces supported by network elements. This is increasingly important as networks get more and more complex and diverse. The introspection does not depend on any specific software technologies used in the application platform or the network element. It may make use of the SNMP protocol which is today supported by the majority of network elements to enable network management.

A trigger is a piece of information sent by a network element to the service logic whereas a handle is a command sent by the service logic to a network element.

Another object of the present invention is to provide an application and related software module which enables to interrogate the interface of a network element.

These objects are achieved by a software module which is part of an application platform. The software module is adapted to interrogate an interface of a network element to find out which triggers and handles the network element supports. The module sends requests to the network element and stores in a data model information on the interface received back from the network element.

According to aspects of the present invention, there is provided a management information base as specified in claim 1, a network element as specified in claims 2 and 3, a software module as specified in claims 4 to 6, an application as specified in claim 7 and a method as specified in claims 8 to 10.

### Brief Description of the Drawings

A preferred embodiment of the present invention will now be described with reference to the accompanying drawings in which
- figure 1: shows in general the interworking between network layer and application layer in a telecommunications network;
- figure 2: shows in more detail the reference network configuration used in the specific embodiment; and
- figure 3:: shows the interrogation of a network element and the communication between an application and a network element using triggers and handles.

### Detailed Description of the Invention

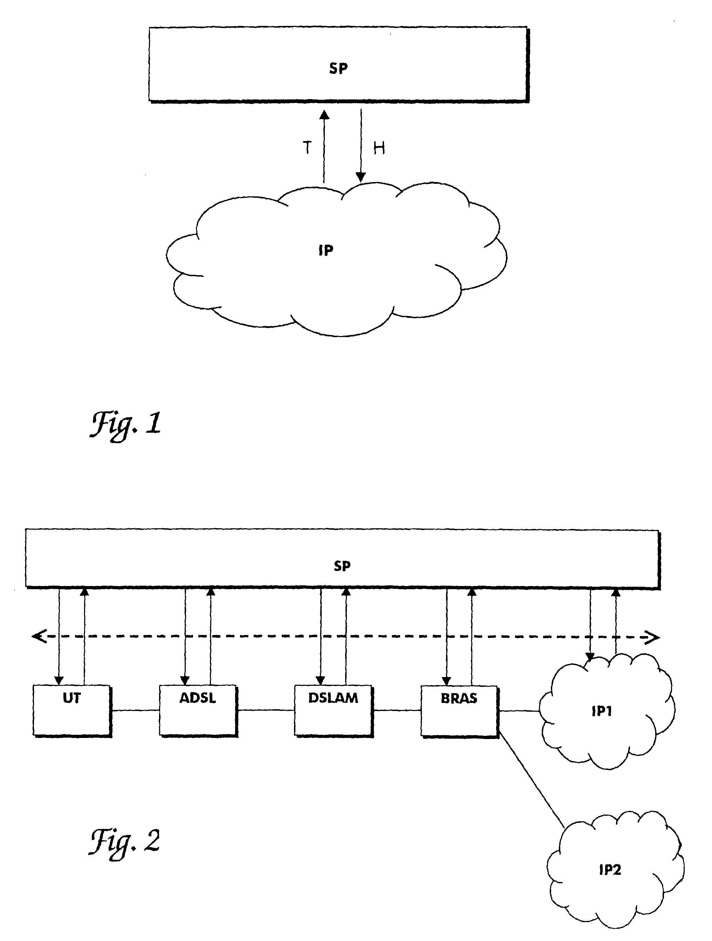

The general architecture of a telecommunications network and service logic is shown in figure 1. The telecommunications network IP includes several interconnected network elements. A service platform SP provides telecommunications services on top of the network. The service platform SP may either be a single application running on a user terminal, on a server in the network, or may be a distributed service platform which includes several software modules each or some in combination offering a certain service to an end-user.

Network element means any network device including network connectivity capability like access network elements and core network elements. In the specific embodiments, the telecommunications network is an IP network and the term network element thus includes core routers and edge routers, broadband access servers, digital subscriber line equipment, modems, and the like. The network elements perform any functions belonging to the network layer. On the other hand, the service logic is a set of high-level applications providing value-added services to end-users and is not concerned with network connectivity services. The service logic therefore represents the application layer. The term application means any software module running in the service logic.

According to the present invention, service logic SP and network elements of the network IP communicate with each other by means of triggers T and handles H. A trigger T is a piece of information sent by a network element to the service logic SP whereas a handle is a command sent by the service logic SP to a network element. More specifically, a trigger is a notification containing data sent by a network element to the service logic SP upon occurrence of a specific network event. Triggers are thus a way for network elements to provide information that can be used by the service logic SP and that, somehow, participate in value-added services visible to end-users. An example of a trigger is a presence trigger used by the service logic for billing, for advertisement, etc. A handle H is a command sent by the service logic to a network element. These commands for example request the network element to execute some actions like configuration of QoS (Quality of Service), setup of connections, update a router table, etc, the network element is capable of among all its networking capabilities. Handles can as well contain useful information. Handles are thus a way to drive network resources for the benefit of a service platform.

The network architecture that will be used in the following specific embodiment is shown in more detail in figure 2. It comprises a user terminal UT connected to an ADSL (Asymmetric Digital Subscriber Line) modem ADSL. Via a digital subscriber line, the ADSL modem is connected to the DSL equipment DSLAM of an access provider. The DSLAM is connected to a broadband remote access server BRAS of the provider and to the BRAS, two IP networks IP1, IP2 of two different network providers are connected.

Each of these devices, i.e., the user terminal, the ADSL modem, the DSLAM and the BRAS as well as network elements of the two IP networks communicate with the service platform SP by means of triggers and handles. Network layer and application layer are separated in the figure by a broken line.

A basic idea of the present invention is to introduce a new type of Management Information Base (MIB) that describes the triggers and handles interfaces of a network element. Via this MIB, an application platform can then use the Simple Network Management Protocol (SNMP) to request information on the interfaces of the network element, such as for example:
- Get list of supported triggers and handles.
- For a given trigger, get the triggering event.
- For a given trigger or handle, get list of parameters supported (indicating for each parameter whether it is optional or mandatory).

A management information base (MIB) is a formal description of a set of network objects that can be managed using a protocol like SNMP.

A traditional MIB is used for the sole purpose of network management, i.e., to control and monitor the network elements in the network. From the perspective of a network manager, network management takes place between two major types of systems: those in control, called managing systems, and those observed and controlled, called managed systems. The most common managing system is called a network management system (NMS). Managed systems can include hosts, servers, or network components such as routers or intelligent repeaters. ,

To promote interoperability, cooperating systems must adhere to a common framework and a common language called a protocol. In the Internet Network Management Framework, that protocol is the Simple Network Management Protocol (SNMP).

In a managed device, specialized low-impact software modules, called agents, access information about the device and make it available to the NMS. Managed devices maintain values for a number of variables and report those, as required, to the NMS. For example, an agent might report such data as the number of bytes and packets in and out of the device, or the number of broadcast messages sent and received. In the Internet Network Management Framework, each of these variables is referred to as a managed object. A managed object is anything that can be managed, anything that an agent can access and report back to the NMS. All managed objects are contained in the Management Information Base (MIB), a database of the managed objects.

An NMS can control a managed device by sending a message to an agent of that managed device requiring the device to change the value of one or more of its variables. The managed devices can respond to commands such as set or get commands. The set commands are used by the NMS to control the device. The get commands are used by the NMS to monitor the device.

The MIB of a network element is defined specifically for this network element in a high-level language like ASN.1 (Abstract Syntax Notation One), which is a formal language for abstractly describing messages to be exchanged between distributed systems. The MIB defines the set of managed objects this NE supports. These objects are organized as a tree where they inherit from existing objects. The ASN.1 file containing the MIB description is then compiled by a tool together with Managed Object Agents that are used to manipulate the Managed Objects. The resulting file is an executable file, which is part of the software of the network element. This software file is then downloaded at startup time to the network element from the NMS. At run-time, the NMS interacts with Manager Object Agents using a protocol like SNMP to modify states of Managed Objects. In the NMS, there exists an image of the MIB that reflects the current state of the MIB residing in the network element.

According to the present invention, use is made of the MIB by an application platform to interrogate the triggers and handles the network element supports. Therefore, the MIB contains new managed objects describing the supported triggers and handles. Via NMS, the network element is configured to include in its MIB the relevant managed objects for the supported interfaces to the application platform. Triggers and handles can thus be seen as new managed objects to be added as an extension to the MIB of the network element.

The network element comprises further to the MIB with its new managed objects one or more software agents which serve to access and maintain the new managed objects for triggers and handles and make upon request from an application the information on the supported triggers handles available.

Another aspect of the present invention consists in the introduction of a new module into the application platform, the Network Interface Discovery (NID) module. The role of the NID module consists in:
- Obtaining the complete information on triggers and handles interfaces supported by a network element, by using an algorithm to systematically interrogate the MIB. The algorithm will typically collect the information by sending a sequence of requests, e.g., get all interfaces, for each interface get list of messages, etc. and
- storing this information in a data model in the application platform, where it will be accessed by applications. When an application wants to check if a trigger or handle is supported by a certain network element, it may check this data model.

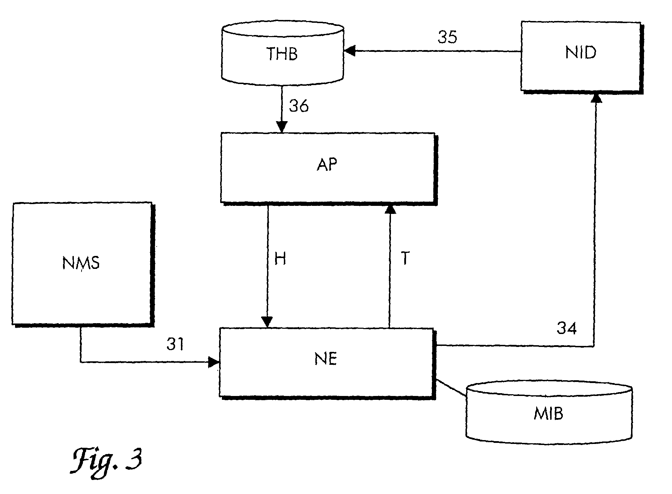

The communication between an application AP and a network element NE using triggers T and handles H is shown in a first embodiment in figure 3. A network management system NMS configures in a first step 31 a list of supported triggers and handles by provisioning network element NE with a management information base MIB containing corresponding managed objects. The MIB is stored in a database on a permanent storage of the network element NE. In step 34, a Network Interface Discovery module NID interrogates the network element by sending requests as explained above to the network element and receiving back pieces of information on the supported triggers and handles. These pieces of information are stored in step 35 in a trigger and handle database THB in the application platform to which the application AP belongs. If application AP wants to send a command to the network element, it consults in step 36 database THB to check which handle version the network element NE supports and sends the appropriate handle H. When a specific network event occurs, the network element NE sends to the application AP a trigger T indicating to the applications AP that this specific event has occurred.

The trigger and handle database THB may be any kind of data model suited to store in a structured way the information on triggers and handles received from one or more network elements and may be implemented on a permanent storage of any kind.

The NID module as described above may be part of a single application or a distributed application platform. Nevertheless, its functions may also be included directly into a single application instead of providing a distinct software module.

The interface interrogation according to the present invention can to advantage be used in combination with a subscribe/notify mechanism as described in the co-pending European patent application entitled "Trigger between Service Platform and Network Element", application number EP 01 440 129.3, filed on 10.05.2001.

The basic concept of this subscribe/notify mechanism is that an application subscribes with a network element for triggers it is interested to receive by sending an appropriate subscription request to the network element. The subscription request specifies the event that is to be notified to the application and the parameters the application is interested to receive. Upon occurrence of an event of the specified type, the network element generates and sends to the subscribed application a trigger message including the requested trigger parameters.

In order to benefit best of the subscribe/notify mechanism, it is advantageous that the application investigates the interfaces of the network element, first, to see what triggers the network element offers for subscription and what triggers parameters would be available. In the example shown in figure 3, this means that the Network Interface Discovery module NID sends in step 34 investigation requests like "Get list of supported triggers and handles." and "For a given trigger, get list of supported parameters." to the network element NE. The information received back from the network element NE are then stored in database THB. The application AP can thus look into database THB to see what triggers and trigger parameters the network element NE offers. Then application AP subscribes to the network element for a certain trigger and upon occurrence of the corresponding trigger event, network element NE send the requested trigger T to the subscribed application AP.

The following example shows how triggers or handles can be defined as managed object using ANS.1.The example describes Radius, COPS (Common Open Policy Service) and Diameter handles for a broadband remote access server (BRAS) as the one shown in figure 2. The figures are used to illustrate one example, only, and may be different for other examples. For the accounting attributes the same attribute id (i.e. username = attribute 1, acctstatustype = 40) are used as in RFC2139 for Radius accounting which is

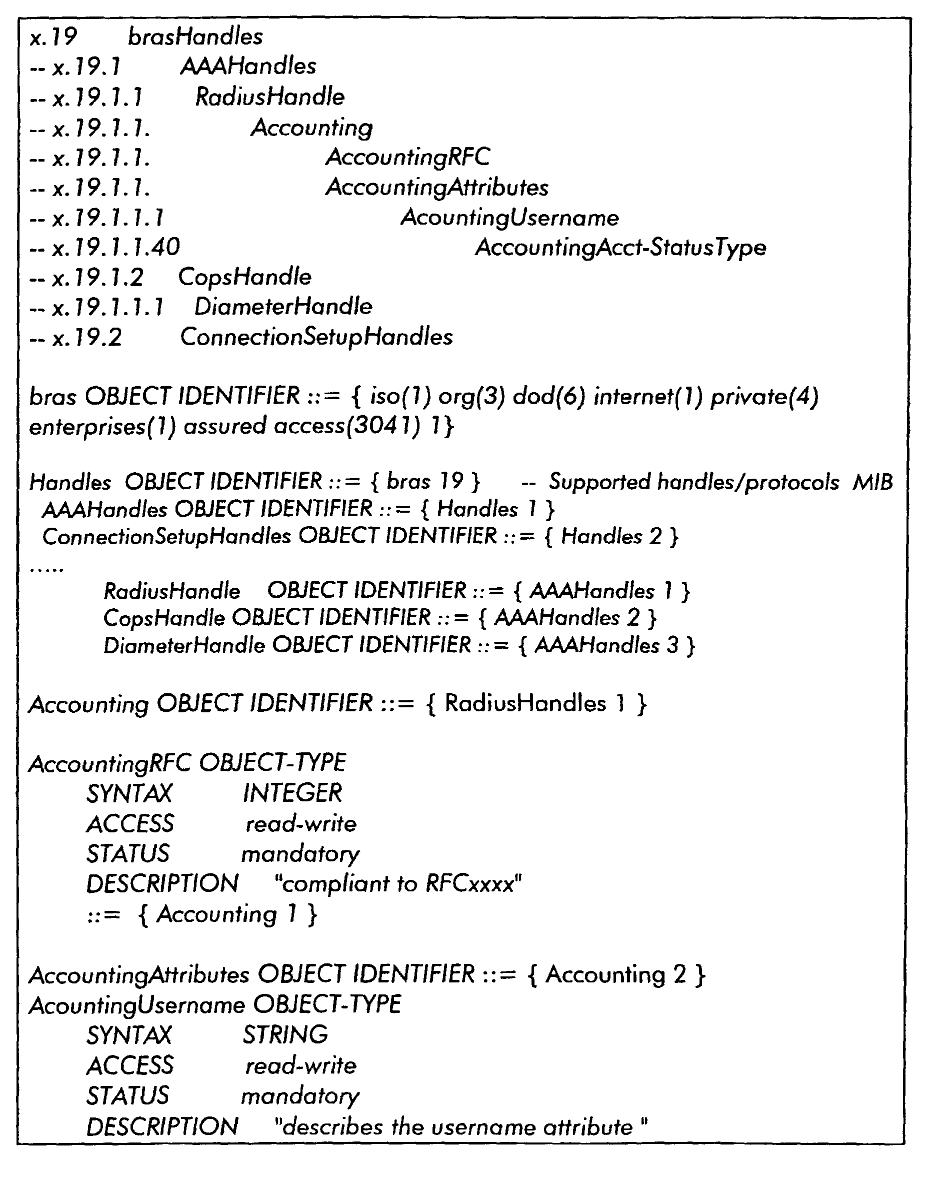

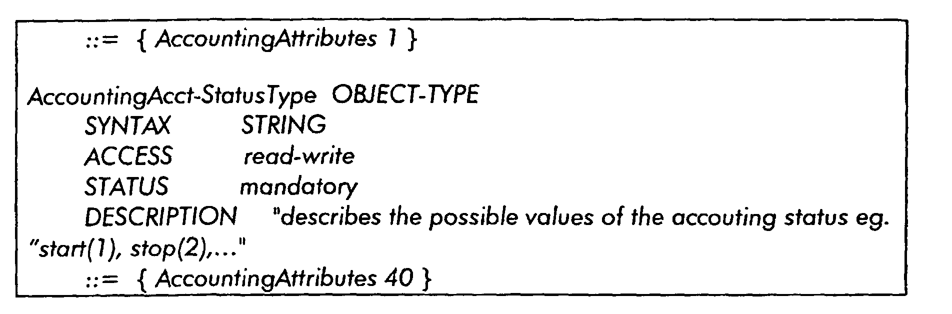

Having now described the invention with respect to a preferred embodiment, it should be understood by those skilled in the art that various other changes, omissions, and additions would be possible without departing from the scope of the invention. It is to be noted that for example the introduction of the NID module functionality into the application platform is not necessarily required for the implementation of the invention. Instead of interrogating the interface of a network element in advance and storing the information on its interface in a data model, it would also be possible to ask a network element each time a handle is to be sent or each time a subscription to a trigger shall be made, whether the network element supports this trigger or handle and which version and parameters it supports. However, it is preferred to interrogate any supported triggers and handles in advance in order to minimize network traffic.

Another advantageous modification would be the introduction of an additional software module into the application platform, the Network Interface Adaptation (NIA) module. The role of the NIA module consists in:
- Translating commands issued by applications, in a protocol independent way, e.g., set NAT table to allow for traffic between (IP address a, port x) and (IP address b, port y) towards the specific protocol message or the specific handle for the given network element.
- Translating triggers from network elements, e.g., RADIUS accounting message or any other trigger, into the network independent representation of triggers used internally in the application platform.

## Claims

1. A management information base (MIB) for a network element (NE), said management information base (MIB) being a database comprising managed objects describing variables and parameters accessible by a network management system (NMS) to control and monitor said network element (NE),
whereby
the management information base (MIB) further comprising additional objects describing triggers (T) supported by said network element (NE), said triggers (T) being notifications containing information to be sent by said network element (NE) to an application (AP) upon occurrence of predefined events
**characterised**
**in that** said additional objects comprised in the management information base (MIB) further describe handles (H) supported by said network element, said handles (H) being commands to be sent by an application (AP) requesting execution of predefined actions at said network element (NE),
and **in that** said application is a software module running in a service logic, the service logic being a set of high-level applications providing value-added services to end-users.

2. A network element (NE) comprising a management information base (MIB) according to claim 1.

3. A network element (NE) according to claim 2, further comprising at least one software agent adapted to access and maintain said additional objects and serving to make upon request from an application (AP) the information on the supported triggers (T) and handles (H) available to the application.

4. A software module (NID) as part of an application (AP) running in a service logic, the service logic being a set of high-level applications providing value-added services to end-users; said software module (NID) being adapted to interrogate an interface of a network element (NE) to find out which triggers (T) and handles (H) the network element (NE) supports by sending requests to the network element (NE) and storing in a data model (THB) information on the interface received back from the network element (NE), said triggers and handles being described by objects comprised in a management in formation base (MIB) for the network element, said triggers (T) being notifications containing information to be sent by said network element (NE) to an application (AP) upon occurrence of predefined events and said handles (H) being commands to be sent by an application (AP) requesting execution of predefined actions at said network element (NE).

5. A software module (NID) as claimed in claim 4 using Simple Network Management Protocol to send said requests to a network element (NE).

6. A software module (NID) as claimed in claim 4, wherein said requests comprising at least one request from the list
- get list of supported triggers (T) and handles (H);
- for a given trigger (T), get the triggering event; and
- for a given trigger (T) or handle (H), get list of parameters supported.

7. An application (AP) comprising a software module (NID) according to claim 4.

8. A method of interrogating an interface of a network element (NE) by an application (AP) to find out which triggers (T) and handles (H) the network element (NE) supports; said application being a software module running in a service logic, the service logic being a set of high-level applications providing value-added services to end-users; said triggers and handles being described by objects comprised in a management in formation base (MIB) for the network element, said triggers (T) being notifications containing information to be sent by said network element (NE) to an application (AP) upon occurrence of predefined events and said handles (H) being commands to be sent by an application (AP) requesting execution of predefined actions at said network element (NE), said method comprising the steps of
- sending (34) at least one request to the network element (NE) and
- storing (35) in a data model information on the interface received back from the network element (NE).

9. A method according to claim 8, further comprising the steps of
- upon reception of the request at the network element (NE), accessing managed objects to retrieve the requested information, said managed object being stored in a management information base (MIB) in the network element (NE) and describing triggers (T) and handles (H) supported by said network element (NE), and
- sending the retrieved information back to the application (AP) that initiated the request.

10. A method according to claim 8, wherein said at least one request being one from the list
- get list of supported triggers (T) and handles (H);
- for a given trigger (T), get the triggering event; and
- for a given trigger (T) or handle (H), get list of parameters supported.

## Patentansprüche

1. Eine Management-Informations-Basis (MIB) für ein Netzelement (NE), wobei die Management-Informations-Basis (MIB) eine Datenbank ist, die verwaltete Objekte enthält, welche Variablen und Parameter beschreiben, die für ein Netzwerk-Management-System (NMS) zugänglich sind, um das Netzelement (NE) zu steuern und zu überwachen, wobei die Management-Informations-Basis (MIB) weiterhin zusätzliche Objekte enthält, die Trigger (T) beschreiben, welche durch das Netzelement (NE) unterstützt werden, wobei die Trigger (T) Benachrichtigungen sind, die Informationen enthalten, die vom Netzelement (NE) bei Auftreten vordefinierter Ereignisse an eine Applikation (AP) zu senden sind, **dadurch gekennzeichnet, dass** die zusätzlichen Objekte in der Management-Informations-Basis (MIB) weiterhin Handles (H) beschreiben, die von dem Netzelement unterstützt werden, wobei die Handles (H) Befehle sind, die durch eine Applikation (AP) zu senden sind und die Ausführung vordefinierter Aktionen des Netzelementes (NE) anfordern, und dadurch, dass die Applikation ein Software-Modul ist, das in einer Dienstlogik läuft, wobei die Dienstlogik ein Satz von Applikationen auf höherer Ebene ist, die dem Endanwender Mehrwertdienste bieten.

2. Ein Netzelement (NE), das eine Management-Informations-Basis (MIB) gemäß Anspruch 1 enthält.

3. Ein Netzelement (NE) gemäß Anspruch 2, das weiterhin mindestens einen Software-Agent enthält, der so angepasst ist, dass er auf die zusätzlichen Objekt zugreift und sie unterhält und dazu dient, auf Anforderung von einer Applikation (AP) die Information über unterstützte Trigger (T) und Handles (H) der Applikation zugänglich zu machen.

4. Ein Software-Modul (NID) als Teil einer Applikation (AP), die in einer Dienstlogik läuft, wobei die Dienstlogik ein Satz von Applikationen auf höherer Ebene ist, die Endanwendern Mehrwertdienste bieten, wobei das Software-Modul (NID) so angepasst ist, dass es eine Schnittstelle eines Netzelementes (NE) abfragt, um herauszufinden, welche Trigger (T) und Handles (H) das Netzelement (NE) unterstützt, indem es Anfragen an das Netzelement (NE) sendet und Informationen über die Schnittstelle, die es vom Netzelement (NE) zurück erhält, in einem Datenmodell (THB) speichert, wobei die Trigger und Handles durch Objekte beschrieben werden, die in einer Management-Informations-Basis (MIB) für das Netzelement enthalten sind, und wobei die Trigger (T) Benachrichtigungen sind, die Informationen enthalten, die vom Netzelement (NE) bei Auftreten vordefinierter Ereignisse an eine Applikation (AP) zu senden sind, und Handles (H) Befehle sind, die durch eine Applikation (AP) zu senden sind und die Ausführung vordefinierter Aktionen des Netzelementes (NE) anfordern.

5. Ein Softwaremodul (NID), wie in Anspruch 4 beansprucht, welches das Simple Network Management Protocol benutzt, um die Anforderungen an ein Netzelement (NE) zu senden.

6. Ein Softwaremodul (NID), wie in Anspruch 4 beansprucht, worin die Anforderungen mindestens eine aus der folgenden Liste enthalten:
- Abruf der Liste der unterstützten Trigger (T) und Handles (H) ;
- Abruf des Trigger-Ereignisses für einen gegebenen Trigger (T); und
- Abruf der Liste von unterstützten Parametern für einen gegebenen Trigger (T) oder Handle (H).

7. Eine Applikation (AP), die ein Softwaremodul (NID) gemäß Anspruch 4 enthält.

8. Ein Verfahren zur Abfrage einer Schnittstelle eines Netzelementes (NE) durch eine Applikation (AP), um herauszufinden, welche Trigger (T) und Handles (H) das Netzelement (NE) unterstützt, wobei die Applikation ein Software-Modul ist, das auf einer Dienstlogik läuft, wobei die Dienstlogik ein Satz von Applikationen auf höherer Ebene ist, die Endanwendern Mehrwertdienste bieten, wobei die Trigger und Handles durch Objekte beschrieben werden, die in einer Management-Informations-Basis (MIB) für das Netzelement enthalten sind, und wobei die Trigger (T) Benachrichtigungen sind, die Informationen enthalten, die vom Netzelement (NE) bei Auftreten vordefinierter Ereignisse an eine Applikation (AP) zu senden sind, und die Handles (H) Befehle sind, die durch eine Applikation (AP) zu senden sind und die Ausführung vordefinierter Aktionen des Netzelementes (NE) anfordern, wobei das Verfahren folgende Schritte umfasst:
- Senden (34) mindestens einer Anforderung an das Netzelement (NE) und
- Speichern (35) von Informationen über die Schnittstelle, die vom Netzelement (NE) zurück erhalten wurden, in einem Datenmodell.

9. Ein Verfahren gemäß Anspruch 8, das weiterhin folgende Schritte umfasst:
- Bei Empfang der Anforderung am Netzelement (NE) Zugriff auf verwaltete Objekte zum Abruf der angeforderten Information, wobei das verwaltete Objekt in einer Management-Informations-Basis (MIB) im Netzelement (NE) gespeichert ist und Trigger (T) und Handles (H) beschreibt, die von dem Netzelement (NE) unterstützt werden, und
- Senden der abgerufenen Information zurück zur Applikation (AP), welche die Anforderung gestellt hat.

10. Ein Verfahren gemäß Anspruch 8, worin die mindestens eine Anforderung eine aus folgender Liste ist:
- Abruf der Liste der unterstützten Trigger (T) und Handles (H);
- Abruf des Trigger-Ereignisses für einen gegebenen Trigger (T); und
- Abruf der Liste von unterstützten Parametern für einen gegebenen Trigger (T) oder Handle (H).

## Revendications

1. Base d'informations de gestion (MIB) pour un élément de réseau (NE), ladite base d'informations de gestion (MIB) étant une base de données comprenant des objets gérés décrivant des variables et des paramètres accessibles par un gestionnaire de réseau (NMS) pour commander et contrôler ledit élément de réseau (NE),
moyennant quoi
la base d'informations de gestion (MIB) comprend en outre des objets supplémentaires décrivant des déclencheurs (T) supportés par ledit élément de réseau (NE), lesdits déclencheurs étant des notifications contenant des informations devant être envoyées par ledit élément de réseau (NE) à une application (AP) lors de l'occurrence d'événements prédéfinis,
**caractérisé en ce que**
lesdits objets supplémentaires compris dans la base d'informations de gestion (MIB) décrivent en outre des descripteurs (H) supportés par ledit élément de réseau, lesdits descripteurs (H) étant des commandes devant être envoyées par une application (AP) demandant l'exécution d'actions prédéfinies au niveau dudit élément de réseau (NE),
et **en ce que** ladite application est un module logiciel fonctionnant dans une logique de service, la logique de service étant un ensemble d'applications de haut niveau fournissant des services à valeur ajoutée à des utilisateurs finaux.

2. Elément de réseau (NE) comprenant une base d'informations de gestion (MIB) selon la revendication 1.

3. Elément de réseau (NE) selon la revendication 2, comprenant en outre au moins un agent logiciel adapté pour accéder à et gérer lesdits objets supplémentaires et servant à rendre, sur demande provenant d'une application (AP) les informations sur les déclencheurs (T) et les descripteurs (H) supportés disponibles pour l'application.

4. Module logiciel (NID) faisant partie d'une application (AP) fonctionnant dans une logique de service, la logique de service étant un ensemble d'applications de haut niveau fournissant des services à valeur ajoutée à des utilisateurs finaux ; ledit module logiciel (NID) étant adapté pour interroger une interface d'un élément de réseau (NE) pour trouver les déclencheurs (T) et les descripteurs (H) que l'élément de réseau (NE) supporte en envoyant des requêtes à l'élément de réseau (NE) et en stockant dans un modèle de données (THB) des informations sur l'interface reçue en retour depuis l'élément de réseau (NE), lesdits déclencheurs et descripteurs étant décrits par des objets compris dans la base d'informations de gestion (MIB) pour l'élément de réseau, lesdits déclencheurs (T) étant des notifications contenant des informations devant être envoyées par ledit élément de réseau (NE) à une application (AP) lors de l'occurrence d'événements prédéfinis et lesdits descripteurs (H) étant des commandes devant être envoyés par une application (AP) demandant l'exécution d'actions prédéfinies au niveau dudit élément de réseau (NE).

5. Module logiciel (ND) selon la revendication 4, utilisant un protocole de gestion de réseau simple pour envoyer lesdites requêtes à un élément de réseau (NE).

6. Module logiciel (NID selon la revendication 4, dans lequel lesdites requêtes comprennent au moins une requête dans la liste :
obtenir une liste de déclencheurs (T) et de descripteurs (H) supportés ;
pour un déclencheur (T) donné, obtenir l'événement de déclenchement ; et
pour un déclencheur (T) ou un descripteur (H) donné, obtenir une liste de paramètres supportés.

7. Application (AP) comprenant un module logiciel (NID) selon la revendication 4.

8. Procédé d'interrogation d'une interface d'un élément de réseau (NE) par une application (AP) pour trouver les déclencheurs (T) et les descripteurs (H) que l'élément de réseau (NE) supporte ; ladite application étant un module de logiciel fonctionnant dans une logique de service, la logique de service étant un ensemble d'applications de haut niveau fournissant des services à valeur ajoutée à des utilisateurs finaux ; lesdits déclencheurs et descripteurs étant décrits par des objets compris dans une base d'information de gestion (MIB) pour l'élément de réseau, lesdits déclencheurs (T) étant des notifications contenant des informations devant être envoyées par ledit élément de réseau (NE) à une application (AP) lors de l'occurrence d'événements prédéfinis et lesdits descripteurs (H) étant des commandes devant être envoyées par une application (AP) demandant l'exécution d'actions prédéfinies au niveau dudit élément de réseau (NE), ledit procédé comprenant les étapes consistant à
envoyer (34) au moins une requête à l'élément de réseau (NE) et
stocker (35) dans un modèle de données des informations sur l'interface reçue en retour depuis l'élément de réseau (NE) .

9. Procédé selon la revendication 8, comprenant en outre les étapes consistant à :
à réception de la requête au niveau de l'élément de réseau (NE), accéder aux objets gérés pour extraire les informations demandées, ledit objet géré étant stocké dans une base d'informations de gestion (MIB) dans l'élément de réseau (NE) et décrivant des déclencheurs (T) et des descripteurs (H) supportés par ledit élément de réseau (NE), et
envoyer les informations extraites en retour vers l'application (AP) qui a lancé la requête.

10. Procédé selon la revendication 8, dans lequel ladite au moins une requête étant l'une dans la liste
obtenir une liste des déclencheurs (T) et des descripteurs (H) supportés ;
pour un déclencheur (T) donné, obtenir l'événement de déclenchement ; et
pour un déclencheur (T) ou un descripteur (H) donné, obtenir une liste des paramètres supportés.
